# EUROPEAN PATENT SPECIFICATION

(11) **EP 4 439 419 B1**
(45) Date of publication and mention of the grant of the patent: **09.09.2026**
(21) Application number: 23193192.4
(22) Date of filing: 24.08.2023
(51) Int. Cl.: G06Q 10/0631, G06Q 10/101, G06T 19/00

(54) **INFORMATION PROCESSING SYSTEM, PROGRAM, AND INFORMATION PROCESSING METHOD**
INFORMATIONSVERARBEITUNGSSYSTEM, PROGRAMM UND INFORMATIONSVERARBEITUNGSVERFAHREN
SYSTÈME, PROGRAMME ET PROCÉDÉ DE TRAITEMENT D'INFORMATIONS

(30) Priority: 28.03.2023 JP 2023050903
(43) Date of publication of application: 02.10.2024
(73) Proprietor: FUJIFILM Business Innovation Corp., Minato-ku Tokyo (JP)
(72) Inventor: KOBAYASHI, Saneyuki, Yokohama-shi, Kanagawa (JP)
(74) Representative: Kurig, Thomas

(56) References cited:
- WO-A1-2013/018174
- CN-A- 107 168 537
- KR-A- 20210 085 929
- US-A1- 2021 373 664

## Description

### BACKGROUND OF THE INVENTION

### (i) Field of the Invention

The present invention relates to an information processing system, a program, and an information processing method.

### (ii) Description of Related Art

A technology for assisting work with respect to an object in a real space using augmented reality (AR) content displayed in an AR space has been known.
KR 2021 0085929 A discloses an augmented reality communication method between multiple users performed by a main administrator computing device, including the steps of: performing communication connection with a plurality of on-site user computing devices; acquiring and displaying the captured images from the plurality of field user computing devices; providing a sub-administrator-site user matching interface that matches a sub-administrator computing device and the on-site user computing device; and performing augmented reality communication between the sub-administrator computing device and the on-site user computing device selected according to the matching interface.
WO 2013/018174 A1 discloses a job handover support device communicating with the respective information processing terminals possessed by multiple workers, and storing the job schedule for each worker and the context for each worker. When a worker is unable to execute a job and the startup conditions for a job to be executed by this worker have been satisfied, the job handover support device specifies among the other workers a handover candidate suitable for taking the job, on the basis of the stored job schedule for each worker and the context for each worker.
US 20211373664 A1 discloses a system assisting a worker in performing manufacturing tasks involving one or more objects. The system comprises an augmented-reality display system, a task-state sensing system that determines a state of a manufacturing task, a physiological-state-sensing system that detects a physiological state of the worker, and an electronic processing system. The electronic processing system determines a guidance setting for the worker from their detected physiological state and determines assistance information to display to the worker based on the state of the manufacturing task and the determined guidance setting for the worker. The augmented-reality display system displays the determined assistance information to the worker in a controlled spatial relationship to the object(s).

### SUMMARY OF THE INVENTION

In such a technology, the AR content may not be shared between workers. Thus, in a case where work is handed over between the workers, a person to which the work is handed over may not be able to start the work at an intended timing.

An object of the present invention is to enable a person to which work with respect to an object in a real space is handed over from another person to start the work at an intended timing in a case where the work is assisted using AR content.

The present invention is provided in the appended claims. The following disclosure serves a better understanding of the present invention. According to a first aspect of the present disclosure, there is provided an information processing system including one or plural processors configured to, in a case where an object set as a target to be imaged in a first terminal is set as a target to be imaged in a second terminal, display AR content displayed on the first terminal for assisting work with respect to the object on the second terminal.

According to a second aspect of the present disclosure, there is provided the information processing system according to the first aspect, in which the first terminal may be a terminal operated by a first user as a source from which the work is handed over, and the second terminal may be a terminal operated by, among one or more users extracted as candidates of a second user as a destination to which the work is handed over, a user determined as the second user.

According to a third aspect of the present disclosure, there is provided the information processing system according to the second aspect, in which the one or the plurality of processors may be configured to extract the one or more users as the candidates of the second user based on a positional relationship with respect to the first terminal, and display information indicating each of the extracted one or more users on the first terminal in a selectable aspect as the candidates of the second user.

According to a fourth aspect of the present disclosure, there is provided the information processing system according to the second or third aspect, in which the one or the plurality of processors may be configured to display information indicating at least one of a status of the work or a skill level of the work of each of the one or more users extracted as the candidates of the second user on the first terminal.

According to a fifth aspect of the present disclosure, there is provided the information processing system according to any one of the second to fourth aspects, in which the one or the plurality of processors may be configured to, in displaying the candidates of the second user on the first terminal, determine an aspect of display of the users set as the candidates in accordance with a priority level determined in advance with respect to a status of the work and to a skill level of the work.

According to a sixth aspect of the present disclosure, there is provided the information processing system according to any one of the third to fifth aspects, in which the one or the plurality of processors may be configured to, in a case where a user designated by the first user among the candidates of the second user consents to handover of the work and where the object is set as a target to be imaged in a terminal of the user, determine the user as the second user.

According to a seventh aspect of the present disclosure, there is provided the information processing system according to any one of the second to sixth aspects, in which the one or the plurality of processors may be configured to determine, as the second user, a user who is a user operating a terminal in which the object is set as a target to be imaged and who has consented to handover of the work among the one or more users extracted as the candidates of the second user based on a positional relationship with respect to the first terminal.

According to an eighth aspect of the present disclosure, there is provided the information processing system according to any one of the second to seventh aspects, in which the one or the plurality of processors may be configured to, in a case where there are a plurality of users who are users operating a terminal in which the object is set as a target to be imaged and who have consented to handover of the work among the one or more users, determine the second user based on at least one of a status of the work or a skill level of the work of each of the users.

According to a ninth aspect of the present disclosure, there is provided the information processing system according to any one of the second to eighth aspects, in which the one or the plurality of processors may be configured to display information indicating a procedure of the work for each step of the work.

According to a tenth aspect of the present disclosure, there is provided the information processing system according to any one of the second to ninth aspects, in which the one or the plurality of processors may be configured to display information indicating a step of the work performed by the first user among steps of the work in a distinguishable aspect from information indicating other steps.

According to an eleventh aspect of the present disclosure, there is provided the information processing system according to any one of the second to ninth aspects, in which the one or the plurality of processors may be configured to display information indicating details of the work up to a step of the work to be performed by the second user among steps of the work near information indicating the step of the work.

According to a twelfth aspect of the present disclosure, there is provided the information processing system according to the eleventh aspect, in which the one or the plurality of processors may be configured to display a summary of information indicating a procedure of the work in displaying the information indicating the details of the work.

According to a thirteenth aspect of the present disclosure, there is provided a program causing a computer to implement a function of, in a case where an object set as a target to be imaged in a first terminal is set as a target to be imaged in a second terminal, displaying AR content displayed on the first terminal for assisting work with respect to the object on the second terminal.

According to a fourteenth aspect of the present disclosure, there is provided an information processing method including displaying, in a case where an object set as a target to be imaged in a first terminal is set as a target to be imaged in a second terminal, AR content displayed on the first terminal for assisting work with respect to the object on the second terminal.

According to the first aspect of the present invention, in a case where the object set as the target to be imaged in the first terminal is set as the target to be imaged in the second terminal, the AR content displayed on the first terminal for assisting the work with respect to the object is displayed on the second terminal. Accordingly, the handover of the work between terminals of the AR content for assisting the work with respect to the object can be seamlessly performed. Consequently, a person to which the work respect to the object is handed over can start the work at an intended timing.

According to the second aspect of the present invention, the AR content displayed on the first terminal operated by the first user as the source from which the work is handed over is displayed on the second terminal operated by the second user as the destination to which the work is handed over. Accordingly, since the handover of the work from the first user to the second user is seamlessly performed, the second user can start the work that is handed over at an intended timing.

According to the third aspect of the present invention, the information indicating each of the one or more users extracted based on the positional relationship with respect to the first terminal is displayed on the first terminal in a selectable aspect as the candidates of the second user. Thus, the first user can select the destination to which the work is handed over from among the candidates of the second user.

According to the fourth aspect of the present invention, the information indicating at least one of the status of the work or the skill level of the work of each of the one or more users set as the candidates of the second user is displayed on the first terminal. Thus, the first user can select the destination to which the work is handed over based on the status or the skill level of the work.

According to the fifth aspect of the present invention, in displaying the candidates of the second user on the first terminal, the aspect of display of the users set as the candidates of the second user is determined in accordance with the priority level determined in advance with respect to the status of the work and to the skill level of the work. Thus, the second user appropriate as the destination to which the work is handed over is likely to be selected.

According to the sixth aspect of the present invention, in a case where the user designated by the first user among the candidates of the second consents to the handover of the work and where the object as a target of the work is set as the target to be imaged in the terminal of the user, the user is determined as the second user. Thus, operation that respects decision of the user as the destination to which the work is handed over can be performed.

According to the seventh aspect of the present invention, the second user is automatically determined without causing the first user to perform designation. Thus, seamless handover of the work from the first user to the second user is promoted.

According to the eighth aspect of the present invention, even in a case where there are a plurality of users as the candidates of the second user, the second user is automatically determined without causing the first user to perform designation. Thus, seamless handover of the work from the first user to the second user is promoted.

According to the ninth aspect of the present invention, the information indicating the procedure of the work is displayed for each step. Thus, convenience of the second user who is the destination to which the work is handed over is improved.

According to the tenth aspect of the present invention, the information indicating the step performed by the first user among the steps of the work is displayed in a distinguishable aspect from the information indicating the other steps. Thus, the second user can perceive progress of the work at a glance.

According to the eleventh aspect of the present invention, the information indicating the details of the work up to the step of the work to be performed by the second user is displayed near the information indicating the step of the work. Thus, the second user can perceive what kind of work has been performed up to the work to be performed by the second user.

According to the twelfth aspect of the present invention, the summary of the information indicating the procedure of the work is displayed in displaying the information indicating the details of the work. Thus, the second user can efficiently perceive what kind of work has been performed up to the work to be performed by the second user. In addition, since the procedure of the work is compactly summarized, a screen region is efficiently used.

According to the thirteenth aspect of the present invention, in a case where the object set as the target to be imaged in the first terminal is set as the target to be imaged in the second terminal, the AR content displayed on the first terminal for assisting the work with respect to the object is displayed on the second terminal. Accordingly, the handover of the work between terminals of the AR content for assisting the work with respect to the object can be seamlessly performed. Consequently, a person to which the work respect to the object is handed over can start the work at an intended timing.

According to the fourteenth aspect of the present invention, in a case where the object set as the target to be imaged in the first terminal is set as the target to be imaged in the second terminal, the AR content displayed on the first terminal for assisting the work with respect to the object is displayed on the second terminal. Accordingly, the handover of the work between terminals of the AR content for assisting the work with respect to the object can be seamlessly performed. Consequently, a person to which the work respect to the object is handed over can start the work at an intended timing.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an information processing system to which the present exemplary embodiment is applied;
Fig. 2 is a diagram illustrating an example of a hardware configuration of a management server;
Fig. 3 is a diagram illustrating an example of a hardware configuration of a user terminal;
Fig. 4 is a diagram illustrating an example of a functional configuration of a control unit of the management server;
Fig. 5 is a diagram illustrating an example of a functional configuration of a control unit of the user terminal;
Fig. 6 is a flowchart illustrating an example of a flow of processing of the management server;
Fig. 7 is a flowchart illustrating an example of a flow of processing of the user terminal as a first terminal of a first user;
Fig. 8 is a diagram illustrating a specific example of a user interface displayed on the user terminal as the first terminal of the first user in a case where there are a plurality of candidates of a second user;
Fig. 9 is a diagram illustrating a specific example of the user interface displayed on the user terminal as the first terminal of the first user in a case where the second user is specified in advance;
Fig. 10 is a diagram illustrating a specific example of an annotation displayed on the user terminal as a second terminal;
Figs. 11A and 11B are diagrams illustrating a relationship between the candidates of the second user displayed on the user terminal as the first terminal and information stored in databases: Fig. 11A is a diagram illustrating a relationship between the candidates of the second user and work status information stored in a work status DB, and Fig. 11B is a diagram illustrating a relationship between the candidates of the second user and user information stored in a user DB; and
Fig. 12 is a diagram illustrating a specific example of the user interface displayed on the user terminal of a user extracted as the candidate of the second user in a case where there has been a request to hand over work from the first user.

### DETAILED DESCRIPTION OF THE INVENTION

Hereinafter, an exemplary embodiment of the present invention will be described in detail with reference to the accompanying drawings.

### <Overall Configuration of Information Processing System>

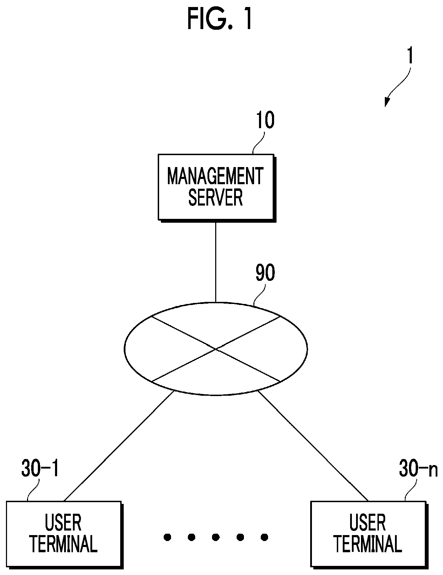

Fig. 1 is a diagram illustrating an example of an overall configuration of an information processing system 1 to which the present exemplary embodiment is applied.

The information processing system 1 is configured by connecting a management server 10 to user terminals 30-1 to 30-n (n is an integer value greater than or equal to 1) via a network 90. The network 90 is, for example, a local area network (LAN) or the Internet. The user terminals 30-1 to 30-n may be collectively referred to as a "user terminal 30" unless necessary to be individually described.

### (Management Server)

The management server 10 constituting the information processing system 1 is an information processing apparatus as a server that manages the entire information processing system 1. The management server 10 performs processing of acquiring various types of information transmitted from the user terminal 30, various types of processing with respect to the acquired various types of information, and processing of transmitting various types of information toward the user terminal 30.

For example, in a case where an object set as a target to be imaged by the user terminal 30 as a first terminal is set as a target to be imaged by the user terminal 30 as a second terminal, the management server 10 performs a control for displaying, on the user terminal 30 as the second terminal, AR content that is displayed on the user terminal 30 as the first terminal for assisting work of the user with respect to the object. Here, "set as the target to be imaged" refers to a state where the object is displayed on a finder of a display unit of the user terminal 30 on which the AR content is displayed.

In addition, the "AR content" refers to content to which augmented reality (AR) technology is applied and is content for assisting the work of the user with respect to the object. In addition, the "work of the user with respect to the object" refers to work with respect to the object performed by any user among a plurality of users. In addition, the "work" refers to work consisting of a plurality of steps. The "object" as a target of the work is not particularly limited and may be, for example, various apparatuses. Hereinafter, the "work of the user with respect to the object" may be simply referred to as the "work".

In addition, the "first terminal" refers to the user terminal 30 operated by a user (hereinafter, referred to as a "first user") as a source from which the work with respect to the object is handed over. In addition, the "second terminal" refers to the user terminal 30 operated by, among one or more users extracted as candidates of a user (hereinafter, referred to as a "second user") as a destination to which the work with respect to the object is handed over, a user determined as the second user.

The second user is determined by the management server 10. A method of determining the second user via the management server 10 will be described later. Hereinafter, the user terminal 30 as the first terminal may be referred to as the "user terminal 30 as the first terminal" or may be simply referred to as the "first terminal". In addition, similarly, the user terminal 30 as the second terminal may be referred to as the "user terminal 30 as the second terminal" or may be simply referred to as the "second terminal". Details of the configuration and processing of the management server 10 will be described in detail later.

### (User Terminal)

The user terminal 30 is an information processing apparatus such as a smartphone, a tablet terminal, or a head-mounted display (HMD) operated by the user who uses the information processing system 1. The user terminal 30 acquires various types of information transmitted from the management server 10 and performs various types of processing. In addition, the user terminal 30 transmits various types of information toward the management server 10.

For example, the user terminal 30 displays the AR content based on control information transmitted from the management server 10. In addition, the user terminal 30 displays annotation information in a superimposed manner on the displayed AR content. In addition, the user terminal 30 receives various input operations performed by the user and transmits input information toward the management server 10.

The above configuration of the information processing system 1 is merely an example, and the information processing system 1 as a whole may have functions that realize the above processing. Thus, all or a part of the functions implementing the above processing may be shared or used in cooperation with each other in the information processing system 1. That is, all or a part of the functions of the management server 10 may be provided as functions of the user terminal 30, or all or a part of the functions of the user terminal 30 may be provided as functions of the management server 10. In addition, all or a part of the functions of each of the management server 10 and the user terminal 30 constituting the information processing system 1 may be transferred over to another server or the like, not illustrated, to perform all or a part of the above processing. Accordingly, the processing of the information processing system 1 as a whole may be accelerated, and the processing can also be complemented.

### <Hardware Configuration>

### (Hardware Configuration of Management Server)

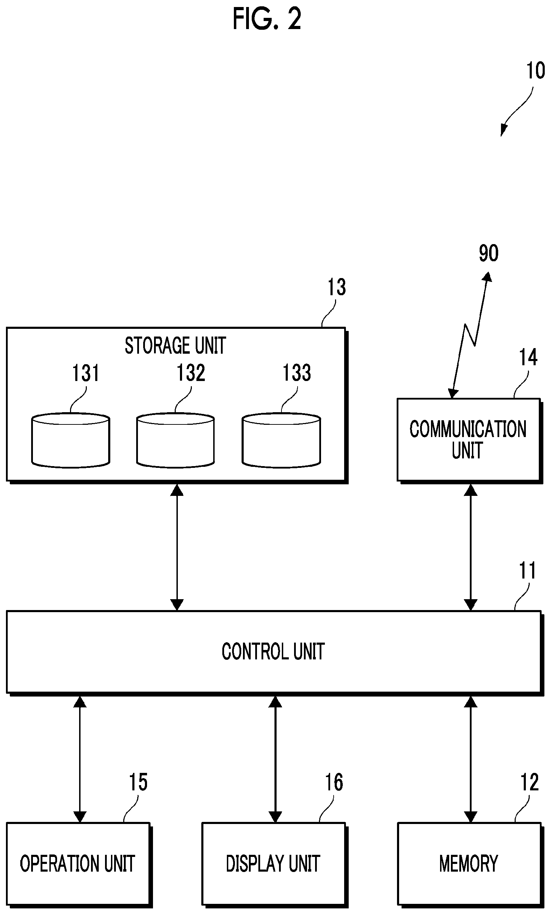

Fig. 2 is a diagram illustrating an example of a hardware configuration of the management server 10.

The management server 10 includes a control unit 11, a memory 12, a storage unit 13, a communication unit 14, an operation unit 15, and a display unit 16. These units are connected to each other via a data bus, an address bus, a peripheral component interconnect (PCI) bus, or the like.

The control unit 11 is a processor that controls the functions of the management server 10 by executing various types of software such as an OS (basic software) and application software (software applications). The control unit 11 is configured with, for example, a central processing unit (CPU). The memory 12 is a storage region in which various types of software and data and the like used for executing the software are stored, and is used as a work area in operations. The memory 12 is configured with, for example, a random access memory (RAM).

The storage unit 13 is a storage region in which input data for various types of software, output data from various types of software, and the like are stored. The storage unit 13 is configured with, for example, a hard disk drive (HDD), a solid state drive (SSD), or a semiconductor memory used for storing programs, various types of setting data, and the like. Databases that store various types of information are stored in the storage unit 13. The databases stored in the storage unit 13 include, for example, a user DB 131 in which information (hereinafter, referred to as "user information") related to the user who operates the user terminal 30 is stored, a content DB 132 in which the AR content is stored, and a work status DB 133 in which information (hereinafter, referred to as "work status information") indicating a status of the work executed using the AR content is stored.

The communication unit 14 transmits and receives data to and from the user terminal 30 and an outside via the network 90. The operation unit 15 is configured with, for example, a keyboard, a mouse, a mechanical button, or a switch and receives an input operation. The operation unit 15 may include a touch sensor that is integrated with the display unit 16 to constitute a touch panel. The display unit 16 is configured with, for example, a liquid crystal display or an organic electro luminescence (EL) display used for displaying information and displays image (video and still image) data, text data, and the like.

### (Hardware Configuration of User Terminal)

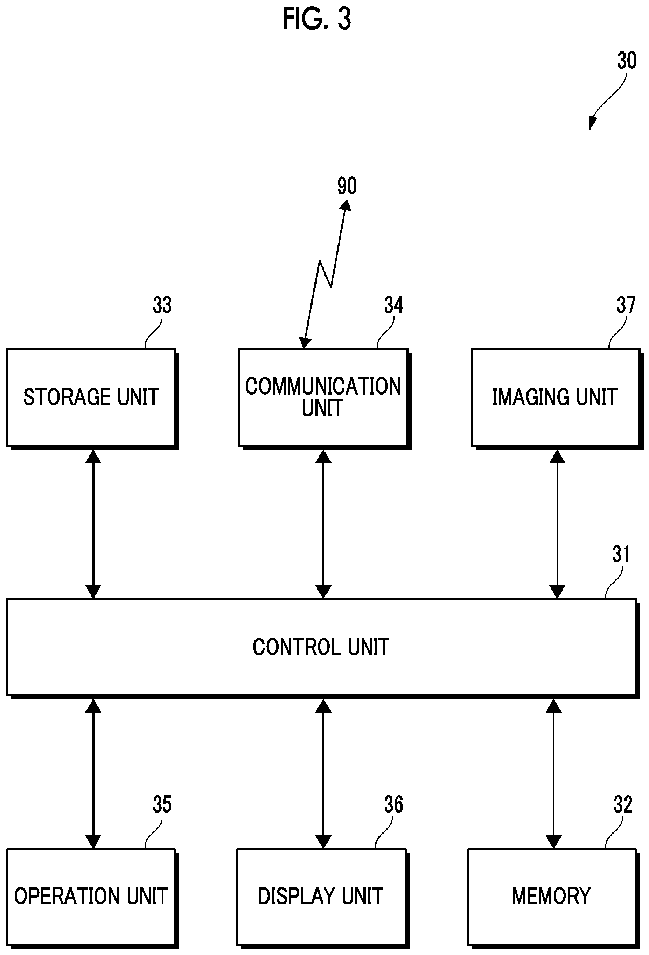

Fig. 3 is a diagram illustrating a hardware configuration of the user terminal 30.

The user terminal 30 includes a control unit 31, a memory 32, a storage unit 33, a communication unit 34, an operation unit 35, and a display unit 36 corresponding to the control unit 11, the memory 12, the storage unit 13, the communication unit 14, the operation unit 15, and the display unit 16, respectively, of the management server 10 in Fig. 2 and, in addition to these configurations, includes an imaging unit 37. The imaging unit 37 is configured with a camera or the like and acquires data of a video by imaging a plurality of original documents as a subject displayed on the display unit 36 that also functions as a finder of the camera. These units are connected to each other via a data bus, an address bus, a PCI bus, or the like.

### <Functional Configuration>

### (Management Server)

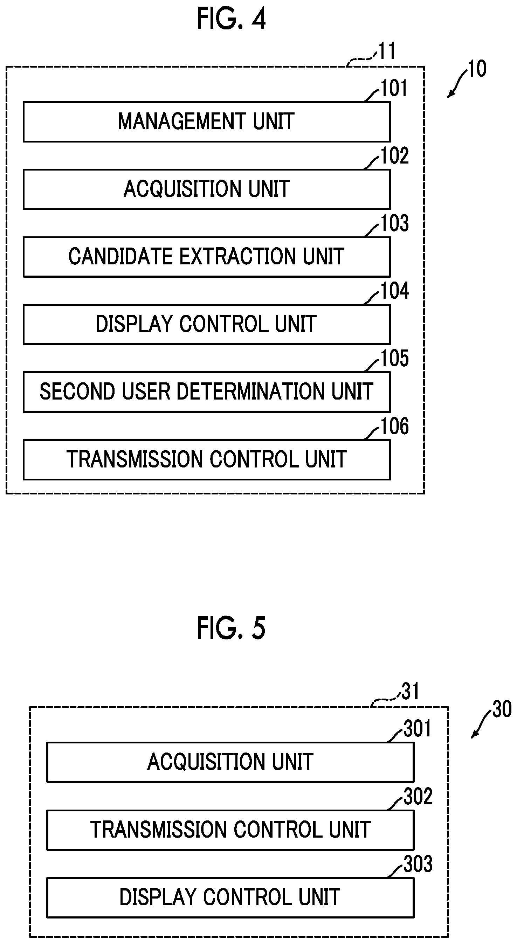

Fig. 4 is a diagram illustrating an example of a functional configuration of the control unit 11 of the management server 10.

A management unit 101, an acquisition unit 102, a candidate extraction unit 103, a display control unit 104, a second user determination unit 105, and a transmission control unit 106 function in the control unit 11 of the management server 10.

The management unit 101 stores and manages various types of information in the databases of the storage unit 13 (refer to Fig. 2). For example, the management unit 101 stores and manages the user information in the user DB 131. The user information includes at least a skill level of the work. In addition, the management unit 101 stores and manages the AR content in the content DB 132.

In addition, the management unit 101 stores and manages the work status information in the work status DB 133. The management unit 101 manages the user information stored in the user DB 131, the AR content stored in the content DB 132, and the work status information stored in the work status DB 133 in association with each other.

The acquisition unit 102 acquires various types of information. For example, the acquisition unit 102 acquires various types of information transmitted from each of the user terminal 30 and the outside. Examples of the information transmitted from the user terminal 30 in the information acquired by the acquisition unit 102 include the input information input by an operation of the user. The input information input by the operation of the user is, for example, information (hereinafter, referred to as "handover request information") input by the user for requesting handover of the work or information (hereinafter, referred to as "handover consent information") input by the user for consenting to the request to hand over the work.

The candidate extraction unit 103 extracts one or more users as the candidates of the second user as the destination to which the work with respect to the object is handed over, from among a plurality of users who operate the user terminal 30. For example, the candidate extraction unit 103 extracts one or more users as the candidates of the second user based on a positional relationship with respect to the first terminal.

The display control unit 104 performs a control for displaying various types of information on the display unit 36 of the user terminal 30 as the first terminal or as the second terminal. Specifically, the display control unit 104 transmits control information for displaying various types of information toward the user terminal 30. For example, the display control unit 104 transmits control information for displaying the AR content and the annotation information to be superimposed on the AR content on the display unit 36 of the user terminal 30 toward the user terminal 30.

In addition, the display control unit 104 transmits control information for displaying information indicating each of the one or more users as the candidates of the second user extracted by the candidate extraction unit 103 in a selectable aspect on the user terminal 30 as the first terminal. For example, the display control unit 104 transmits control information for displaying information indicating at least one of the status of the work or the skill level of the work of each of the one or more users extracted as the candidates of the second user on the user terminal 30 as the first terminal.

The control information transmitted toward the user terminal 30 as the first terminal includes an aspect of display determined in accordance with a priority level related to the status of the work and the skill level of the work of each of the one or more users extracted as the candidates of the second user. The "aspect of display" is, for example, an order of display of the candidates of the second user on the user terminal 30 as the first terminal.

In addition, the display control unit 104 transmits control information for displaying information indicating a procedure of the work for each step of the work as the annotation information to be superimposed on the AR content. Here, the "information indicating the procedure of the work" is, for example, information in which the procedure of the work is described. In this case, the display control unit 104 transmits control information for displaying information indicating a step of the work performed by the first user among the steps of the work in a distinguishable aspect from information indicating the other steps.

In addition, the display control unit 104 transmits control information for displaying information indicating details of the work up to a step of target work near information indicating the step of the work to be performed by the second user among the steps of the work as the annotation information to be superimposed on the AR content. In this case, the display control unit 104 transmits control information for further displaying a summary of information indicating a procedure of the target work in displaying the information indicating the details of the work up to the step of the target work on the user terminal 30.

The second user determination unit 105 determines the second user based on information (hereinafter, referred to as "request destination designation information") related to a user designated by the first user as the destination to which the work is handed over among the one or more users extracted as the candidates of the second user by the candidate extraction unit 103. For example, in a case where the object set as the target to be imaged in the user terminal 30 as the first terminal of the first user is also set as the target to be imaged in the user terminal 30 of another user specified from the request destination designation information and where the user consents to the handover of the work, the second user determination unit 105 determines the user as the second user.

In addition, in a case where there are a plurality of users who are users operating the user terminal 30 in which the object as a target of the work is set as the target to be imaged and who have consented to the handover of the work, the second user determination unit 105 determines the second user based on at least one of the status of the work or the skill level of the work of each of the plurality of users.

The transmission control unit 106 performs a control of transmitting various types of information. Specifically, the transmission control unit 106 performs a control of transmitting various types of information toward each of the user terminal 30 and the outside. In the information of which transmission is controlled by the transmission control unit 106, the information transmitted toward the user terminal 30 is, for example, the control information for displaying the AR content and the control information for displaying the annotation information to be superimposed on the AR content.

### (User Terminal)

Fig. 5 is a diagram illustrating an example of a functional configuration of the control unit 31 of the user terminal 30.

An acquisition unit 301, a transmission control unit 302, and a display control unit 303 function in the control unit 31 of the user terminal 30.

The acquisition unit 301 acquires various types of information. Specifically, the acquisition unit 301 acquires various types of information transmitted from the management server 10 and from the outside. In addition, the acquisition unit 301 acquires the input information input by the operation unit. In the information acquired by the acquisition unit 301, the information transmitted from the management server 10 is, for example, the control information for displaying the AR content and the control information for displaying the annotation information to be superimposed on the AR content. In addition, in the information acquired by the acquisition unit 301, the input information is, for example, the handover request information in a case where the user terminal 30 is functioning as a terminal of another user other than the first terminal, and the handover consent information in a case where the user terminal 30 is functioning as the first terminal.

The transmission control unit 302 performs a control of transmitting various types of information. Specifically, the transmission control unit 302 performs a control of transmitting various types of information toward the management server 10 and toward the outside. In the information of which transmission is controlled by the transmission control unit 302, the information transmitted toward the management server 10 is, for example, the input information input by the user. The input information transmitted toward the management server 10 is, for example, the handover request information and the request destination designation information input into the user terminal 30 as the first terminal and the handover consent information input into the user terminal 30 as the terminal of the other user other than the first terminal.

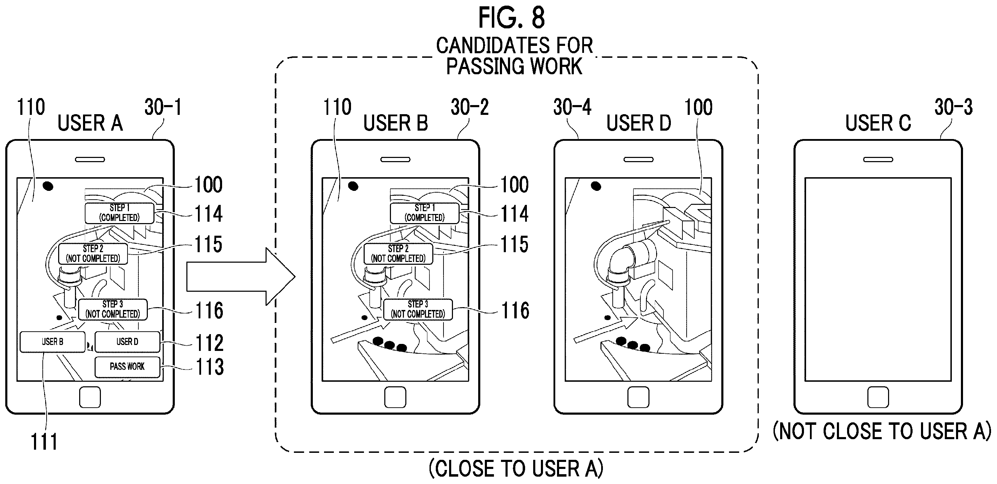

The display control unit 303 performs a control for displaying various types of information on the display unit 36 (refer to Fig. 3). Specifically, the display control unit 303 performs a control for displaying the AR content and the annotation information to be superimposed on the AR content on the display unit 36. Specific examples of information displayed on the display unit 36 of the user terminal 30 will be described later with reference to the specific examples in and after Fig. 8.

### <Flow of Processing>

### (Flow of Processing of Management Server)

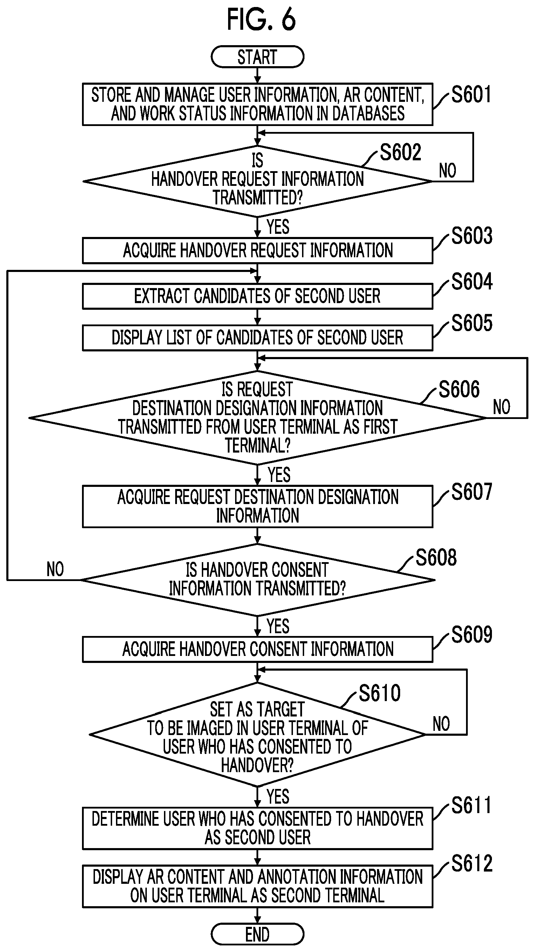

Fig. 6 is a flowchart illustrating an example of a flow of processing of the management server 10.

The management server 10 stores and manages the user information, the AR content, and the work status information in the databases (step S601). Specifically, the management server 10 stores and manages the user information, the AR content, and the work status information in the user DB 131, the content DB 132, and the work status DB 133, respectively, of the storage unit 13. The user information stored in the user DB 131 includes at least the skill level of the work.

In a case where the handover request information is transmitted from the user terminal 30 as the first terminal of the first user (YES in step S602), the management server 10 acquires the transmitted handover request information (step S603). On the other hand, in a case where the handover request information is not transmitted (NO in step S602), the management server 10 repeats the determination processing of step S602 until the handover request information is transmitted.

Next, the management server 10 extracts the candidates of the second user (step S604). Specifically, one or more users as the candidates of the second user as the destination to which the work with respect to the object is handed over are extracted from among the plurality of users who operate the user terminal 30. For example, the one or more users as the candidates of the second user are extracted based on the positional relationship with respect to the user terminal 30 as the first terminal that has transmitted the handover request information.

Next, the management server 10 displays a list of the candidates of the second user (step S605). Specifically, the management server 10 transmits control information for displaying the list of the candidates of the second user extracted in the processing of step S604 toward the user terminal 30 as the first terminal of the first user. Accordingly, the list of the candidates of the second user is displayed on the user terminal 30 as the first terminal.

Then, in a case where the request destination designation information is transmitted from the user terminal 30 as the first terminal of the first user (YES in step S606), the management server 10 acquires the transmitted request destination designation information (step S607). On the other hand, in a case where the request destination designation information is not transmitted (NO in step S606), the management server 10 repeats the determination processing of step S606 until the request destination designation information is transmitted.

Next, in a case where the handover consent information is transmitted from the user terminal 30 of the user specified from the request destination designation information (YES in step S608), the management server 10 acquires the transmitted handover consent information (step S609). On the other hand, in a case where the handover consent information is not transmitted (NO in step S608), the processing of the management server 10 returns to step S604. In this case, a user who has not consented to the handover in step S608 is excluded from a target of extraction in the processing of step S604 performed again.

In a case where the object set as the target to be imaged in the user terminal 30 as the first terminal of the first user is also set as the target to be imaged in the user terminal 30 of the other user who has consented to the handover (YES in step S610), the management server 10 determines the user who has consented to the handover as the second user (step S611). On the other hand, in a case where the object set as the target to be imaged in the user terminal 30 as the first terminal of the first user is not set as the target to be imaged in the user terminal 30 of the other user who has consented to the handover (NO in step S610), the management server 10 repeats the determination processing of step S610 until the object is also set as the target to be imaged in the user terminal 30 of the other user who has consented to the handover.

Next, the management server 10 displays the AR content and the annotation information on the user terminal 30 as the second terminal (step S612). Specifically, the management server 10 transmits the control information for displaying the AR content displayed on the user terminal 30 as the first terminal and the annotation information to be superimposed on the AR content toward the user terminal 30 as the second terminal.

### (Flow of Processing of User Terminal as First Terminal)

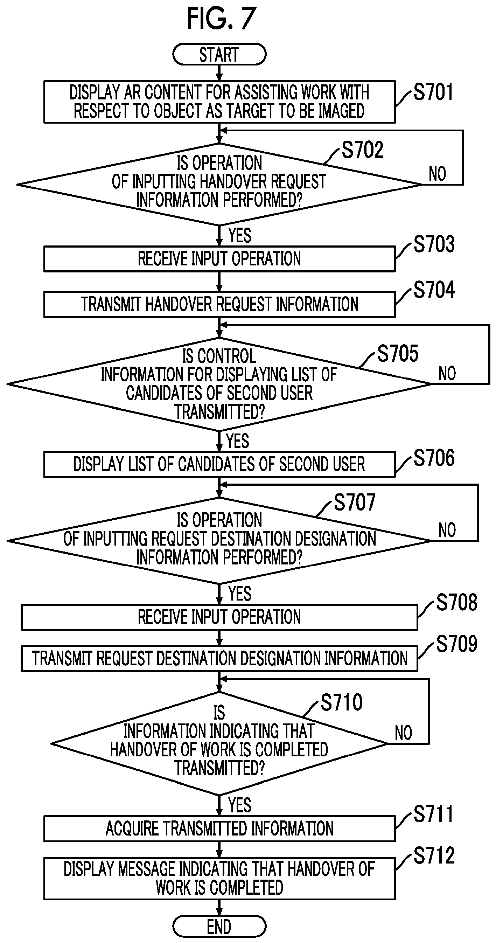

Fig. 7 is a flowchart illustrating an example of a flow of processing of the user terminal 30 as the first terminal of the first user.

The user terminal 30 as the first terminal displays the AR content for assisting the work with respect to the object as the target to be imaged (step S701). Then, in a case where an operation of inputting the handover request information is performed by the first user (YES in step S702), the input operation is received (step S703), and the handover request information is transmitted toward the management server 10 (step S704). On the other hand, in a case where the operation of inputting the handover request information is not performed (NO in step S702), the user terminal 30 as the first terminal repeats the determination processing of step S702 until the operation of inputting the handover request information is performed.

Then, in a case where the control information for displaying the list of the candidates of the second user is transmitted from the management server 10 (YES in step S705), the user terminal 30 as the first terminal displays the list of the candidates of the second user based on the transmitted control information (step S706). On the other hand, in a case where the control information for displaying the list of the candidates of the second user is not transmitted (NO in step S705), the user terminal 30 as the first terminal repeats the determination processing of step S705 until the control information for displaying the list of the candidates of the second user is transmitted.

Then, in a case where an operation of inputting the request destination designation information is performed by the first user (YES in step S707), the user terminal 30 as the first terminal receives the input operation (step S708) and transmits the request destination designation information toward the management server 10 (step S709). On the other hand, in a case where the operation of inputting the request destination designation information is not performed (NO in step S707), the user terminal 30 as the first terminal repeats the determination processing of step S707 until the operation of inputting the request destination designation information is performed.

Then, in a case where information indicating that the handover of the work is completed is transmitted from the management server 10 (YES in step S710), the user terminal 30 as the first terminal acquires the transmitted information (step S711) and displays a message indicating that the handover of the work is completed (step S712). On the other hand, in a case where the information indicating that the handover of the work is completed is not transmitted (NO in step S710), the user terminal 30 as the first terminal repeats the determination processing of step S710 until the information indicating that the handover of the work is completed is transmitted.

### <Specific Example>

### (Specific Example in Case Where There Are Plurality of Candidates of Second User)

Fig. 8 is a diagram illustrating a specific example of a user interface displayed on the user terminal 30 as the first terminal of the first user in a case where there are a plurality of candidates of the second user.

In the example illustrated in Fig. 8, a user A who is the first user is performing work with respect to an object 100 using the user terminal 30-1 as the first terminal operated by the user A. Specifically, the user A is performing the work with respect to the object 100 by displaying AR content 110 for assisting the work with respect to the object 100 on the user terminal 30-1. The work with respect to the object 100 is work consisting of steps in three stages (steps 1 to 3).

Here, the user A who has been performing the work with respect to the object 100 considers handing over the work to another user in a stage where the work of step 1 is completed. In this case, the user A requests the handover of the work by operating the user terminal 30-1. Then, the list of the candidates of the second user is displayed on a screen of the user terminal 30-1 as the annotation information. In the example in Fig. 8, users B and D are listed as the candidates of the second user.

The candidates of the second user are extracted based on a positional relationship with respect to the user terminal 30-1 as the first terminal, the skill level of each user with respect to the work, and the like. In the example in Fig. 8, the users B and D who are close to the user A are extracted as the candidates of the second user. Specifically, the annotation information 111 described as "user B" and annotation information 112 described as "user D" are displayed.

On the other hand, a user C who is not close to the user A is not extracted as the candidate of the second user. A positional relationship between the user A and the users B to D is determined based on a relationship between information indicating a position of the user terminal 30-1 operated by the user A and information indicating a position of each of the user terminals 30-2 to 30-4 operated by the users B to D, respectively. Here, the "information indicating the position" is, for example, "GPS positional information.

Here, the user A designates the user B as the destination to which the work is handed over from the list of the candidates of the second user. Specifically, the annotation information 111 described as "user B" displayed on the screen of the user terminal 30-1 is pressed by an input operation of the user A. In this case, the user B is determined as the second user in a case where the user B designated by the user A consents to the handover of the work from the user A and where the object set as the target to be imaged in the user terminal 30-1 of the user A is also set as the target to be imaged in the user terminal 30-2 of the user B.

In a case where the second user as the destination to which the work of the first user is handed over is determined and where annotation information 113 described as "pass work" displayed on the user terminal 30-1 of the user A is pressed, the AR content 110 displayed on the user terminal 30-1 and the annotation information to be superimposed on the AR content 110 are displayed on the user terminal 30-2 as the second terminal. On the other hand, the AR content 110 and the annotation information to be superimposed on the AR content 110 are not displayed on the user terminal 30-4 of the user D not determined as the second user.

Specifically, annotation information indicating that step 1 is completed and steps 2 and 3 are not completed and annotation information indicating the user as the candidate of the destination to which the work is handed over, which are displayed on the user terminal 30-1, are displayed on the user terminal 30-2. More specifically, annotation information 114 described as "step 1 (completed)", annotation information 115 described as "step 2 (not completed)", and annotation information 116 described as "step 3 (not completed)" are displayed on the user terminal 30-2 as illustrated in Fig. 8.

### (Specific Example in Case Where Second User Is Specified in Advance)

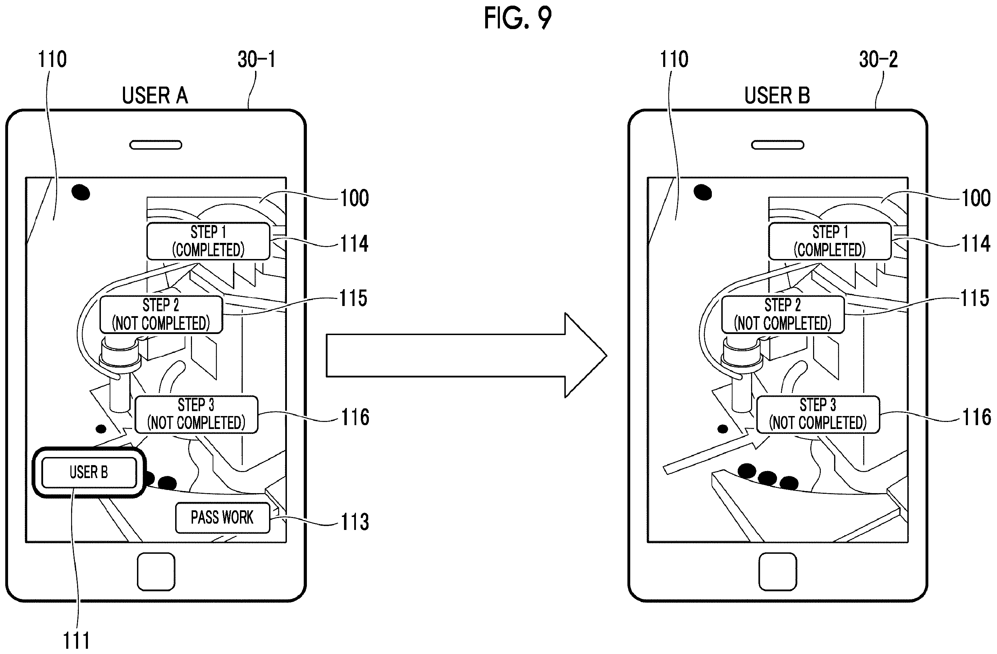

Fig. 9 is a diagram illustrating a specific example of the user interface displayed on the user terminal 30-1 as the first terminal of the first user in a case where the second user is specified in advance.

In the example illustrated in Fig. 9, the user A who is the first user is performing the work consisting of the steps in three stages (steps 1 to 3) with respect to the object 100 using the user terminal 30-1 as the first terminal, in the same manner as the example in Fig. 8. The AR content 110 for assisting the work is displayed on the user terminal 30-1.

Here, the user A who has been performing the work with respect to the object 100 decides to hand over the work to the user B in a stage where the work of step 1 is completed. In this case, the user A calls the user B and requests the handover of the work by operating the user terminal 30-1. Specifically, in a state where the AR content 110 for assisting the work with respect to the object 100 is displayed on the user terminal 30-1, the user A causes the user B to image the object 100 using the user terminal 30-2.

Then, the annotation information 111 described as "user B" is displayed on the user terminal 30-1. This indicates that the user B is the only candidate of the second user. In a case where the first user (user A) has designated a specific user (user B) in advance as in the example illustrated in Fig. 9, the specific user (user B) being the only candidate of the second user may not be indicated. That is, annotation information 111 may be configured to be not displayed.

Here, assuming that the user B designated in advance as the second user has consented to the handover of the work from the user A, the user B is determined as the second user in a case where the object set as the target to be imaged in the user terminal 30-1 of the user A is also set as the target to be imaged in the user terminal 30-2 of the user B. In a case where the annotation information 113 described as "pass work" displayed on the user terminal 30-1 is pressed, the AR content 110 displayed on the user terminal 30-1 and the annotation information to be superimposed on the AR content 110 are displayed on the user terminal 30-2 as the second terminal.

Specifically, the annotation information indicating that step 1 is completed and steps 2 and 3 are not completed and the annotation information indicating the user as the candidate of the destination to which the work is handed over, which are displayed on the user terminal 30-1, are displayed on the user terminal 30-2. More specifically, the annotation information 114 described as "step 1 (completed)", the annotation information 115 described as "step 2 (not completed)", and the annotation information 116 described as "step 3 (not completed)" are displayed on the user terminal 30-2.

### (Specific Example of Annotation Displayed on User Terminal as Second Terminal)

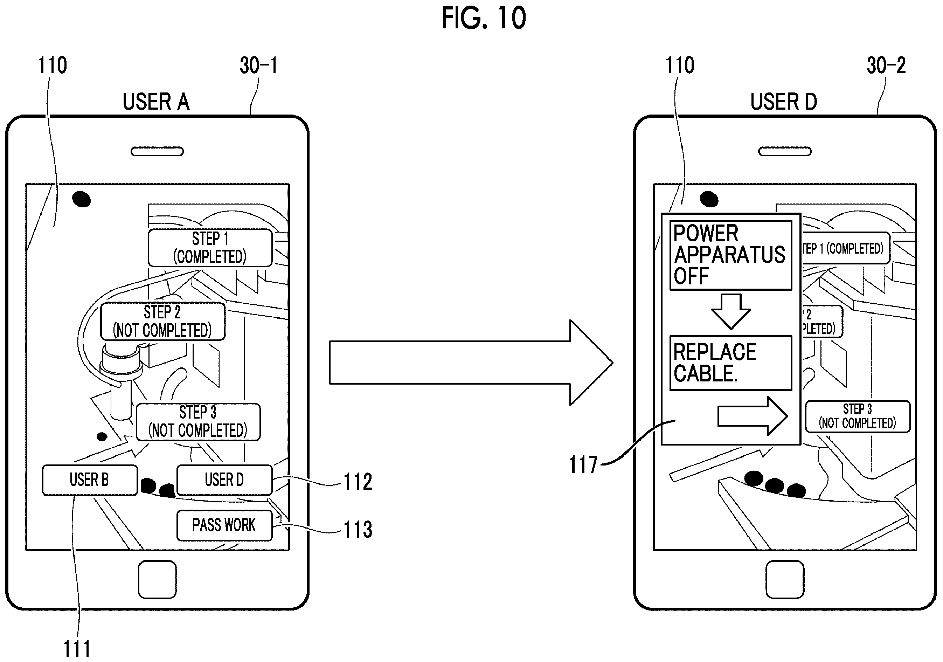

Fig. 10 is a diagram illustrating a specific example of an annotation displayed on the user terminal 30 as the second terminal.

As illustrated in Fig. 8 and Fig. 9, in a case where the work is handed over to the second user from the first user, the AR content 110 displayed on the user terminal 30-1 and the annotation information superimposed on the AR content 110 are displayed on the user terminal 30-2. The second user may not easily perceive the details of the work performed so far by simply looking at the AR content 110 and the annotation information displayed on the user terminal 30-2. In order to prevent such a situation, information indicating what kind of work has been performed up to the work handed over to the second user is displayed on the user terminal 30-2.

Specifically, for example, in a case where step 1 is completed and steps 2 and 3 are not completed among steps 1 to 3 when the work is handed over, annotation information indicating what kind of work has been specifically performed in already completed step 1 is displayed. As a specific example, an example in which annotation information 117 indicating that work "power OFF apparatus" and work "replace cable" have been performed in step 1 is displayed is illustrated in Fig. 10.

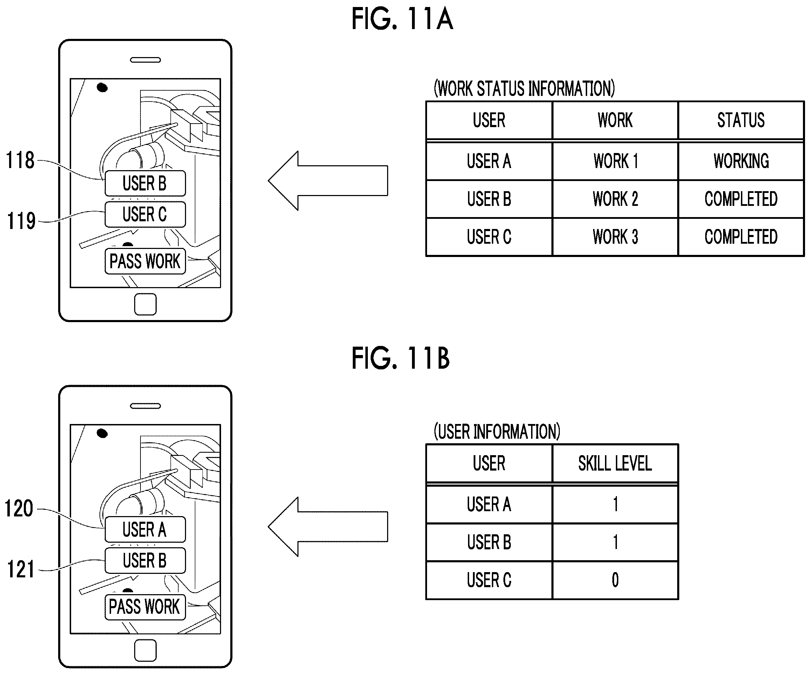

Figs. 11A and 11B are diagrams illustrating a relationship between the candidates of the second user displayed on the user terminal 30 as the first terminal and information stored in the databases. Fig. 11A is a diagram illustrating a relationship between the candidates of the second user and the work status information stored in the work status DB 133. Fig. 11B is a diagram illustrating a relationship between the candidates of the second user and the user information stored in the user DB 131.

The work status information illustrated in Fig. 11A includes the work for which the user is responsible, and the status of the work. For example, the "user A" is responsible for "work 1", and the status of "work 1" is "working". In addition, the "user B" is responsible for "work 2", and the status of the "work 2" is "completed". In addition, the "user C" is responsible for "work 3", and the status of the "work 3" is "completed". That is, the user A working and the users B and C not working are perceived. Whether the status is "working" or "completed" may be determined based on, for example, whether the AR content 110 for assisting the work of the user is displayed or not displayed on the user terminal 30.

In the above content of the work status information of each of the users A to C, even in a case where all of the users A to C are close to the first user, a determination that the user A is working and cannot afford the handover of the work from the first user is made. Thus, the user A is excluded from the target extracted as the candidate of the second user. On the other hand, the users B and C are determined as being free and are extracted as the candidates of the second user. Consequently, as illustrated in Fig. 11A, annotation information 118 indicating the "user B" and annotation information 119 indicating the "user C" are displayed on the user terminal 30 as the first terminal of the first user as the candidates of the second user.

The user information illustrated in Fig. 11B includes the skill level of the user with respect to the work. For example, the skill level of the user with respect to the work may be the number of executions of the target work in the past or may be a normalized value of the number of executions in the past. In addition, the skill level may be based on a reference other than the number of executions in the past. In the example illustrated in Fig. 11B, the skill level of the user A is "1", the skill level of the user B is also "1", and the skill level of the user C is "0". In this case, the users A and B are determined as having a higher skill level than the user C.

In the above content of the skill level of each of the users A to C, even in a case where all of the users A to C are close to the first user, a determination that the user C has a lower skill level than the users A and B is made. Thus, the user C is excluded from the target extracted as the candidate of the second user. On the other hand, the users A and B are determined as having a higher skill level than the user C. Thus, the users A and B are extracted as the candidates of the second user. Consequently, as illustrated in Fig. 11B, annotation information 120 indicating the "user A" and annotation information 121 indicating the "user B" are displayed on the user terminal 30 as the first terminal of the first user as the candidates of the second user.

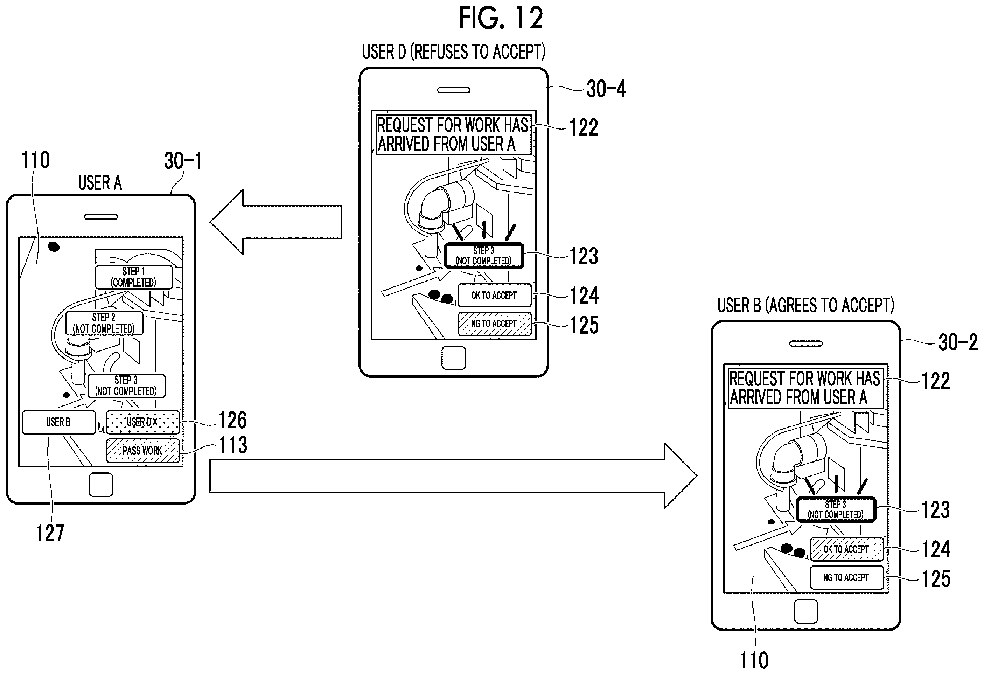

Fig. 12 is a diagram illustrating a specific example of the user interface displayed on the user terminal 30 of the user extracted as the candidate of the second user in a case where there has been a request to hand over work from the first user.

In a case where the request destination designation information is transmitted toward the management server 10 from the user terminal 30-1 as the first terminal of the first user, a message indicating that a request to hand over the work has arrived is displayed on the screen of the user terminal 30 of the user specified from the request destination designation information as the annotation information. For example, in a case where the first user is the "user A" and a request destination is the "user D", annotation information 122 indicating a message "request for work has arrived from user A" is displayed on the user terminal 30-4 of the user D.

In addition, together with the message indicating that the request for the work has arrived, information indicating which step of the work is related to the handover and a button for responding to the request for the work are displayed on the user terminal 30-4 as the annotation information. In the example in Fig. 12, annotation information 123 described as "step 3 (not completed)" is displayed in a highlighted manner as information indicating that step 3 of the work is handed over in the work consisting of steps 1 to 3. In addition, as the annotation information for responding to the request for the work, annotation information 124 indicating a button described as "OK to accept" and annotation information 125 indicating a button described as "NG to accept" are displayed in a selectable aspect.

Here, for example, the user D refuses the request to hand over the work from the user A by pressing the annotation information 125. In this case, information indicating the refusal is displayed on the user terminal 30-1, and annotation information 126 described as "user D" displayed on the user terminal 30-1 is changed to be not displayed or to be displayed in a non-noticeable aspect as illustrated in Fig. 12.

In this case, the user A can change the request destination to which the work is handed over to the "user B" from the "user D" by pressing annotation information described as "user B". Then, the annotation information 122 indicating the message "request for work has arrived from user A" is displayed on the user terminal 30-2 of the user B, and the annotation information 123 described as "step 3 (not completed)" is displayed in a highlighted manner. In addition, as the annotation information for responding to the request for the work, the annotation information 124 indicating the button described as "OK to accept" and the annotation information 125 indicating the button described as "NG to accept" are displayed in a selectable aspect.

Here, for example, the user B consents to the request to hand over the work from the user A by pressing the annotation information 124. At this point, in a case where the object set as the target to be imaged in the user terminal 30-1 of the user A is also set as the target to be imaged in the user terminal 30-2 of the user B, the AR content 110 displayed on the user terminal 30-1 as the first terminal and the annotation information superimposed on the AR content 110 are displayed on the user terminal 30-2.

### [Other Exemplary Embodiments]

While the present exemplary embodiment has been described above, the present invention is not limited to the exemplary embodiment. In addition, effects of the present invention are not limited to the effects disclosed in the exemplary embodiment. For example, all of the configuration of the information processing system 1 illustrated in Fig. 1, the hardware configuration of the management server 10 illustrated in Fig. 2, and the hardware configuration of the user terminal 30 illustrated in Fig. 3 are merely examples for achieving the object of the present invention and are not particularly limited. In addition, the functional configuration of the management server 10 illustrated in Fig. 4 and the functional configuration of the user terminal 30 illustrated in Fig. 5 are merely examples and are not particularly limited. As long as the information processing system 1 in Fig. 1 is provided with a function with which the above processing can be executed as a whole, a functional configuration to be used to implement the function is not limited to the examples in Fig. 4 and Fig. 5.

In addition, the order of the steps of the processing of the management server 10 illustrated in Fig. 6 and of the steps of the processing of the user terminal 30 as the first terminal illustrated in Fig. 7 is merely an example and is not particularly limited. Not only the processing is performed in time series along the illustrated order of the steps, but also the processing may not be performed in time series and may be parallelly or individually performed. In addition, the specific examples illustrated in Fig. 8 to Fig. 12 are merely an example and are not particularly limited.

According to appended claim 1, in a case where the object set as the target to be imaged in the first terminal is set as the target to be imaged in the second terminal, the AR content displayed on the first terminal for assisting the work with respect to the object is displayed on the second terminal. Accordingly, the handover of the work between terminals of the AR content for assisting the work with respect to the object can be seamlessly performed. Consequently, a person to which the work respect to the object is handed over can start the work at an intended timing.

According to the aspect of appended claim 1, the AR content displayed on the first terminal operated by the first user as the source from which the work is handed over is displayed on the second terminal operated by the second user as the destination to which the work is handed over. Accordingly, since the handover of the work from the first user to the second user is seamlessly performed, the second user can start the work that is handed over at an intended timing.

According to the aspect of appended claim 2, the information indicating each of the one or more users extracted based on the positional relationship with respect to the first terminal is displayed on the first terminal in a selectable aspect as the candidates of the second user. Thus, the first user can select the destination to which the work is handed over from among the candidates of the second user.
According to the aspect of appended claim 3, the information indicating at least one of the status of the work or the skill level of the work of each of the one or more users set as the candidates of the second user is displayed on the first terminal. Thus, the first user can select the destination to which the work is handed over based on the status or the skill level of the work.

According to the aspect of appended claim 4, in displaying the candidates of the second user on the first terminal, the aspect of display of the users set as the candidates of the second user is determined in accordance with the priority level determined in advance with respect to the status of the work and to the skill level of the work. Thus, the second user appropriate as the destination to which the work is handed over is likely to be selected.

According to the aspect of appended claim 5, in a case where the user designated by the first user among the candidates of the second consents to the handover of the work and where the object as a target of the work is set as the target to be imaged in the terminal of the user, the user is determined as the second user. Thus, operation that respects decision of the user as the destination to which the work is handed over can be performed.

According to the aspect of appended claim 6, the second user is automatically determined without causing the first user to perform designation. Thus, seamless handover of the work from the first user to the second user is promoted.

According to the aspect of appended claim 7, even in a case where there are a plurality of users as the candidates of the second user, the second user is automatically determined without causing the first user to perform designation. Thus, seamless handover of the work from the first user to the second user is promoted.

According to the aspect of appended claim 8, the information indicating the procedure of the work is displayed for each step. Thus, convenience of the second user who is the destination to which the work is handed over is improved.

According to the aspect of appended claim 9, the information indicating the step performed by the first user among the steps of the work is displayed in a distinguishable aspect from the information indicating the other steps. Thus, the second user can perceive progress of the work at a glance.

According to the aspect of appended claim 10, the information indicating the details of the work up to the step of the work to be performed by the second user is displayed near the information indicating the step of the work. Thus, the second user can perceive what kind of work has been performed up to the work to be performed by the second user.

According to the aspect of appended claim 11, the summary of the information indicating the procedure of the work is displayed in displaying the information indicating the details of the work. Thus, the second user can efficiently perceive what kind of work has been performed up to the work to be performed by the second user. In addition, since the procedure of the work is compactly summarized, a screen region is efficiently used.

According to the aspect of appended claim 12, in a case where the object set as the target to be imaged in the first terminal is set as the target to be imaged in the second terminal, the AR content displayed on the first terminal for assisting the work with respect to the object is displayed on the second terminal. Accordingly, the handover of the work between terminals of the AR content for assisting the work with respect to the object can be seamlessly performed. Consequently, a person to which the work respect to the object is handed over can start the work at an intended timing.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

1: information processing system
10: management server
11: control unit
30: user terminal
31: control unit
90: network
101: management unit
102: acquisition unit
103: candidate extraction unit
104: display control unit
105: second user determination unit
106: transmission control unit
301: acquisition unit
302: transmission control unit
303: display control unit

## Claims

1. An information processing system (10) comprising:
one or a plurality of processors (11) configured to:
receive a handover request from a first terminal (30-1) operated by a first user as a source of a work with respect to an object;
determine a second terminal (30-2) operated by a second user, among one or more users extracted as candidates, as a destination to which the work with respect to the object is handed over; and
in a case where the object set as a target to be imaged in the first terminal (30-1) is set as a target to be imaged in the second terminal (30-2), transmit augmented reality (AR) content displayed on the first terminal (30-1) for assisting work with respect to the object to the second terminal (30-2) and control the second terminal (30-2) to display the AR content.

2. The information processing system (10) according to claim 1, wherein the one or the plurality of processors (11) are configured to:
extract the one or more users as the candidates of the second user based on a positional relationship with respect to the first terminal (30-1); and
display information indicating each of the extracted one or more users on the first terminal (30-1) in a selectable aspect as the candidates of the second user.

3. The information processing system (10) according to claim 1 or 2, wherein the one or the plurality of processors (11) are configured to:
display information indicating at least one of a status of the work or a skill level of the work of each of the one or more users extracted as the candidates of the second user on the first terminal (30-1).

4. The information processing system (10) according to any one of claims 1 to 3, wherein the one or the plurality of processors (11) are configured to:
in displaying the candidates of the second user on the first terminal (30-1), determine an aspect of display of the users set as the candidates in accordance with a priority level determined in advance with respect to a status of the work and to a skill level of the work.

5. The information processing system (10) according to any one of claims 2 to 4, wherein the one or the plurality of processors (11) are configured to:
in a case where a user designated by the first user among the candidates of the second user consents to handover of the work and where the object is set as a target to be imaged in a terminal of the user, determine the user as the second user.

6. The information processing system according to any one of claims 1 to 4, wherein the one or the plurality of processors are configured to:
determine, as the second user, a user who is a user operating a terminal in which the object is set as a target to be imaged and who has consented to handover of the work among the one or more users extracted as the candidates of the second user based on a positional relationship with respect to the first terminal.

7. The information processing system according to any one of claims 1 to 4, wherein the one or the plurality of processors are configured to:
in a case where there are a plurality of users who are users operating a terminal in which the object is set as a target to be imaged and who have consented to handover of the work among the one or more users, determine the second user based on at least one of a status of the work or a skill level of the work of each of the users.

8. The information processing system (10) according to any one of claims 2 to 7, wherein the one or the plurality of processors (11) are configured to:
display information indicating a procedure of the work for each step of the work.

9. The information processing system (10) according to any one of claims 1 to 8, wherein the one or the plurality of processors (11) are configured to:
display information indicating a step of the work performed by the first user among steps of the work in a distinguishable aspect from information indicating other steps.

10. The information processing system (10) according to any one of claims 1 to 8, wherein the one or the plurality of processors (11) are configured to:
display information indicating details of the work up to a step of the work to be performed by the second user among steps of the work near information indicating the step of the work.

11. The information processing system (10) according to claim 10, wherein the one or the plurality of processors (11) are configured to:
display a summary of information indicating a procedure of the work in displaying the information indicating the details of the work.

12. A program causing a computer to implement:
a function of receiving a handover request from a first terminal (30-1) operated by a first user as a source of a work with respect to an object;
a function of determining a second terminal (30-2) operated by a second user, among one or more users extracted as candidates, as a destination to which the work with respect to the object is handed over; and
a function of, in a case where the object set as a target to be imaged in the first terminal (30-1) is set as a target to be imaged in the second terminal (30-2), transmitting augmented reality (AR) content displayed on the first terminal for assisting work with respect to the object on the second terminal (30-2) and controlling the second terminal (30-2) to display the AR content.

13. An information processing method comprising:
receiving a handover request from a first terminal (30-1) operated by a first user as a source of a work with respect to an object;
determining a second terminal (30-2) operated by a second user, among one or more users extracted as candidates, as a destination to which the work with respect to the object is handed over;
transmitting, in a case where the object set as a target to be imaged in the first terminal (30-1) is set as a target to be imaged in the second terminal (30-2), augmented reality (AR) content displayed on the first terminal for assisting work with respect to the object on the second terminal (30-2) and controlling the second terminal (30-2) to display the AR content.

## Patentansprüche

1. Informationsverarbeitungssystem (10), umfassend:
einen oder mehrere Prozessoren (11), die so konfiguriert sind, dass sie:
eine Übergabeanforderung von einem ersten Terminal (30-1), das von einem ersten Benutzer bedient wird, als einer Quelle einer Arbeit in Bezug auf ein Objekt empfangen;
ein zweites Terminal (30-2), das von einem zweiten Benutzer unter einem oder mehreren Benutzern, die als Kandidaten extrahiert worden sind, bedient wird, als ein Ziel, an das die Arbeit in Bezug auf das Objekt übergeben wird, bestimmen; und
in einem Fall, in dem das Objekt, das bei dem ersten Terminal (30-1) als ein Ziel, das abzubilden ist, eingestellt ist, bei dem zweiten Terminal (30-2) als ein Ziel, das abzubilden ist, eingestellt ist, Inhalt von erweiterter Realität (augmented reality, A R), der auf dem ersten Terminal (30-1) angezeigt wird, zum Unterstützen von Arbeit in Bezug auf das Objekt an das zweite Terminal (30-2) übertragen und das zweite Terminal (30-2) so steuern, dass es den AR-Inhalt anzeigt.

2. Informationsverarbeitungssystem (10) nach Anspruch 1, wobei der eine oder die mehreren Prozessoren (11) so konfiguriert sind, dass sie:
den einen oder die mehreren Benutzer als die Kandidaten des zweiten Benutzers auf der Grundlage einer Positionsbeziehung in Bezug auf das erste Terminal (30-1) extrahieren; und
Informationen, die jeden des extrahierten einen oder der extrahierten mehreren Benutzer angeben, auf dem ersten Terminal (30-1) in einer auswählbaren Ansicht als die Kandidaten des zweiten Benutzers anzeigen.

3. Informationsverarbeitungssystem (10) nach Anspruch 1 oder 2, wobei der eine oder die mehreren Prozessoren (11) so konfiguriert sind, dass sie:
Informationen, die mindestens eines von einem Status der Arbeit und einem Fähigkeitsniveau der Arbeit von jedem des einen oder der mehreren Benutzer, die als die Kandidaten des zweiten Benutzers extrahiert worden sind, angeben, auf dem ersten Terminal (30-1) anzeigen.

4. Informationsverarbeitungssystem (10) nach einem der Ansprüche 1 bis 3, wobei der eine oder die mehreren Prozessoren (11) so konfiguriert sind, dass sie:
beim Anzeigen der Kandidaten des zweiten Benutzers auf dem ersten Terminal (30 -1) eine Anzeigeansicht der Benutzer, die als die Kandidaten eingestellt sind, in Übereinstimmung mit einem im Voraus bestimmten Prioritätsniveau in Bezug auf einen Status der Arbeit und ein Fähigkeitsniveau der Arbeit bestimmen.

5. Informationsverarbeitungssystem (10) nach einem der Ansprüche 2 bis 4, wobei der eine oder die mehreren Prozessoren (11) so konfiguriert sind, dass sie:
in einem Fall, in dem ein Benutzer, der von dem ersten Benutzer unter den Kandidaten des zweiten Benutzers designiert ist, einer Übergabe der Arbeit zustimmt und das Objekt bei einem Terminal des Benutzers als ein Ziel, das abzubilden ist, eingestellt ist, den Benutzer als den zweiten Benutzer bestimmen.

6. Informationsverarbeitungssystem nach einem der Ansprüche 1 bis 4, wobei der eine oder die mehreren Prozessoren so konfiguriert sind, dass sie:
einen Benutzer, der ein Benutzer, der ein Terminal bedient, bei dem das Objekt als ein Ziel, das abzubilden ist, eingestellt ist, ist und der einer Übergabe der Arbeit zugestimmt hat, unter dem einen oder den mehreren Benutzern, die als die Kandidaten des zweiten Benutzers extrahiert worden sind, auf der Grundlage einer Positionsbeziehung in Bezug auf das erste Terminal als den zweiten Benutzer bestimmen.

7. Informationsverarbeitungssystem nach einem der Ansprüche 1 bis 4, wobei der eine oder die mehreren Prozessoren so konfiguriert sind, dass sie:
in einem Fall, in dem es mehrere Benutzer, die Benutzer, die ein Terminal bedienen, bei dem das Objekt als ein Ziel, das abzubilden ist, eingestellt ist, sind und die einer Übergabe der Arbeit zugestimmt haben, unter dem einen oder den mehreren Benutzern gibt, den zweiten Benutzer auf der Grundlage von mindestens einem von einem Status der Arbeit und einem Fähigkeitsniveau der Arbeit von jedem der Benutzer bestimmen.

8. Informationsverarbeitungssystem (10) nach einem der Ansprüche 2 bis 7, wobei der eine oder die mehreren Prozessoren (11) so konfiguriert sind, dass sie:
Informationen, die einen Ablauf der Arbeit für jeden Schritt der Arbeit angeben, anzeigen.

9. Informationsverarbeitungssystem (10) nach einem der Ansprüche 1 bis 8, wobei der eine oder die mehreren Prozessoren (11) so konfiguriert sind, dass sie:
Informationen, die einen Schritt der Arbeit, der von dem ersten Benutzer durchgeführt wird, unter Schritten der Arbeit angeben, in einer unterscheidbaren Ansicht von Informationen, die andere Schritte angeben, anzeigen.

10. Informationsverarbeitungssystem (10) nach einem der Ansprüche 1 bis 8, wobei der eine oder die mehreren Prozessoren (11) so konfiguriert sind, dass sie:
Informationen, die Details der Arbeit bis zu einem Schritt der Arbeit, der von dem zweiten Benutzer durchzuführen ist, unter Schritten der Arbeit angeben, nahe Informationen, die den Schritt der Arbeit angeben, anzeigen.

11. Informationsverarbeitungssystem (10) nach Anspruch 10, wobei der eine oder die mehreren Prozessoren (11) so konfiguriert sind, dass sie:
eine Zusammenfassung von Informationen, die einen Ablauf der Arbeit angeben, beim Anzeigen der Informationen, die die Details der Arbeit angeben, anzeigen.

12. Programm, das einen Computer veranlasst, zu implementieren:
eine Funktion des Empfangens einer Übergabeanforderung von einem ersten Terminal (30-1), das von einem ersten Benutzer bedient wird, als einer Quelle einer Arbeit in Bezug auf ein Objekt;
eine Funktion des Bestimmens eines zweiten Terminals (30-2), das von einem zweiten Benutzer unter einem oder mehreren Benutzern, die als Kandidaten extrahiert worden sind, bedient wird, als ein Ziel, an das die Arbeit in Bezug auf das Objekt übergeben wird; und
eine Funktion des Übertragens von Inhalt von erweiterter Realität (AR), der auf dem ersten Terminal angezeigt wird, um Arbeit in Bezug auf das Objekt auf dem zweiten Terminal (30-2) zu unterstützen, und des Steuerns des zweiten Terminals (30-2), um den AR-Inhalt anzuzeigen, in einem Fall, in dem das bei dem ersten Terminal (30-1) als ein abzubildendes Ziel eingestellte Objekt bei dem zweiten Terminal (30-2) als ein abzubildendes Ziel eingestellt ist.

13. Informationsverarbeitungsverfahren, umfassend:
Empfangen einer Übergabeanforderung von einem ersten Terminal (30-1), das von einem ersten Benutzer bedient wird, als einer Quelle einer Arbeit in Bezug auf ein Objekt;
Bestimmen eines zweiten Terminals (30-2), das von einem zweiten Benutzer unter einem oder mehreren Benutzern, die als Kandidaten extrahiert worden sind, bedient wird, als ein Ziel, an das die Arbeit in Bezug auf das Objekt übergeben wird;
Übertragen von Inhalt von erweiterter Realität (AR), der auf dem ersten Terminal angezeigt wird, um Arbeit in Bezug auf das Objekt auf dem zweiten Terminal (30-2) zu unterstützen, und Steuern des zweiten Terminals (30-2), um den AR-Inhalt anzuzeigen, in einem Fall, in dem das bei dem ersten Terminal (30-1) als ein abzubildendes Ziel eingestellte Objekt bei dem zweiten Terminal (30-2) als ein abzubildendes Ziel eingestellt ist.

## Revendications

1. Système de traitement d'informations (10) comprenant :
un ou une pluralité de processeurs (11) configurés pour :
recevoir une demande de transfert provenant d'un premier terminal (30-1) utilisé par un premier utilisateur comme source d'un travail relatif à un objet ;
déterminer un deuxième terminal (30-2) utilisé par un deuxième utilisateur, parmi un ou plusieurs utilisateurs extraits comme candidats, comme destination vers laquelle le travail relatif à l'objet est transféré ; et
dans un cas où l'objet défini comme cible à imager dans le premier terminal (30-1) est défini comme cible à imager dans le deuxième terminal (30-2), transmettre un contenu de réalité augmentée (RA) affiché sur le premier terminal (30-1) pour assister le travail relatif à l'objet au deuxième terminal (30-2) et contrôler le deuxième terminal (30-2) pour afficher le contenu RA.

2. Système de traitement d'informations (10) selon la revendication 1, dans lequel ledit un ou la pluralité de processeurs(11) sont configurés pour :
extraire ledit un ou plusieurs utilisateurs comme candidats du deuxième utilisateur sur la base d'une relation positionnelle par rapport au premier terminal (30-1) ; et
afficher des informations indiquant chacun desdits un ou plusieurs utilisateurs extraits sur le premier terminal (30-1) sous une forme sélectionnable comme candidats du deuxième utilisateur.

3. Système de traitement d'informations (10) selon la revendication 1 ou la revendication 2, dans lequel ledit un ou la pluralité de processeurs (11) sont configurés pour :
afficher des informations indiquant au moins l'un d'un état du travail ou d'un niveau de compétence du travail de chacun desdits un ou plusieurs utilisateurs extraits comme candidats du deuxième utilisateur sur le premier terminal (30-1).

4. Système de traitement d'informations (10) selon l'une quelconque des revendications 1 à 3, dans lequel ledit un ou la pluralité de processeurs (11) sont configurés pour :
lors de l'affichage des candidats du deuxième utilisateur sur le premier terminal (30-1), déterminer un mode d'affichage des utilisateurs définis comme candidats conformément à un niveau de priorité déterminé à l'avance par rapport à un état du travail et à un niveau de compétence du travail.

5. Système de traitement d'informations (10) selon l'une quelconque des revendications 2 à 4, dans lequel ledit un ou la pluralité de processeurs (11) sont configurés pour :
dans un cas où un utilisateur désigné par le premier utilisateur parmi les candidats du deuxième utilisateur consent au transfert du travail et où l'objet est défini comme cible à imager dans un terminal de l'utilisateur, déterminer l'utilisateur comme deuxième utilisateur.

6. Système de traitement d'informations selon l'une quelconque des revendications 1 à 4, dans lequel ledit un ou la pluralité de processeurs sont configurés pour :
déterminer, comme deuxième utilisateur, un utilisateur qui est un utilisateur utilisant un terminal dans lequel l'objet est défini comme cible à imager et qui a consenti au transfert du travail parmi lesdits un ou plusieurs utilisateurs extraits comme candidats du deuxième utilisateur sur la base d'une relation positionnelle par rapport au premier terminal.

7. Système de traitement d'informations selon l'une quelconque des revendications 1 à 4, dans lequel ledit un ou la pluralité de processeurs sont configurés pour :
dans un cas où il y a une pluralité d'utilisateurs qui sont des utilisateurs utilisant un terminal dans lequel l'objet est défini comme cible à imager et qui ont consenti au transfert du travail parmi lesdits un ou plusieurs utilisateurs, déterminer le deuxième utilisateur sur la base d'au moins l'un d'un état du travail ou d'un niveau de compétence du travail de chacun des utilisateurs.

8. Système de traitement d'informations (10) selon l'une quelconque des revendications 2 à 7, dans lequel ledit un ou la pluralité de processeurs (11) sont configurés pour :
afficher des informations indiquant une procédure du travail pour chaque étape du travail.

9. Système de traitement d'informations (10) selon l'une quelconque des revendications 1 à 8, dans lequel ledit un ou la pluralité de processeurs (11) sont configurés pour :
afficher des informations indiquant une étape du travail effectuée par le premier utilisateur parmi des étapes du travail sous une forme distinguable des informations indiquant les autres étapes.

10. Système de traitement d'informations (10) selon l'une quelconque des revendications 1 à 8, dans lequel ledit un ou la pluralité de processeurs (11) sont configurés pour :
afficher des informations indiquant des détails du travail jusqu'à une étape du travail à effectuer par le deuxième utilisateur parmi des étapes du travail à proximité des informations indiquant l'étape du travail.

11. Système de traitement d'informations (10) selon la revendication 10, dans lequel ledit un ou la pluralité de processeurs (11) sont configurés pour :
afficher un résumé d'informations indiquant une procédure du travail lors de l'affichage des informations indiquant les détails du travail.

12. Programme amenant un ordinateur à mettre en œuvre :
une fonction consistant à recevoir une demande de transfert provenant d'un premier terminal (30-1) utilisé par un premier utilisateur comme source d'un travail relatif à un objet ;
une fonction consistant à déterminer un deuxième terminal (30-2) utilisé par un deuxième utilisateur, parmi un ou plusieurs utilisateurs extraits comme candidats, comme destination vers laquelle le travail relatif à l'objet est transféré ; et
une fonction consistant, dans un cas où l'objet défini comme cible à imager dans le premier terminal (30-1) est défini comme cible à imager dans le deuxième terminal (30-2), à transmettre un contenu de réalité augmentée (RA) affiché sur le premier terminal pour assister le travail relatif à l'objet sur le deuxième terminal (30-2) et à contrôler le deuxième terminal (30-2) pour afficher le contenu RA.

13. Procédé de traitement d'informations comprenant :
recevoir une demande de transfert provenant d'un premier terminal (30-1) utilisé par un premier utilisateur comme source d'un travail relatif à un objet ;
déterminer un deuxième terminal (30-2) utilisé par un deuxième utilisateur, parmi un ou plusieurs utilisateurs extraits comme candidats, comme destination vers laquelle le travail relatif à l'objet est transféré ;
transmettre, dans un cas où l'objet défini comme cible à imager dans le premier terminal (30-1) est défini comme cible à imager dans le deuxième terminal (30-2), un contenu de réalité augmentée (RA) affiché sur le premier terminal pour assister le travail relatif à l'objet sur le deuxième terminal (30-2) et contrôler le deuxième terminal (30-2) pour afficher le contenu RA.
